# EUROPÄISCHE PATENTSCHRIFT

(11) **EP 2 407 347 B1**
(45) Veröffentlichungstag und Bekanntmachung des Hinweises auf die Patenterteilung: **04.05.2016**
(21) Anmeldenummer: 11168801.6
(22) Anmeldetag: 06.06.2011
(51) Int. Cl.: B60Q 1/26, B60R 1/12

(54) **Anzeige im Spiegelglas und Verfahren zur Herstellung**
Display in the mirror glass and process for production
Affiche dans le rétroviseur et son procédé de fabrication

(30) Priorität: 13.07.2010 DE 102010032026
(43) Veröffentlichungstag der Anmeldung: 18.01.2012
(73) Patentinhaber: SMR Patents S.à.r.l., 1653 Luxembourg (LU)
(72) Erfinder: Kliem, Andreas, 73614 Schorndorf (DE)
(74) Vertreter: Weber-Bruls, Dorothée

(56) Entgegenhaltungen:
- EP-A2- 1 022 190
- WO-A1-00/30893
- WO-A2-2008/051910
- DE-U1- 29 921 059
- US-A- 6 005 724
- US-A1- 2008 030 835
- US-B1- 7 717 596

## Beschreibung

### Stand der Technik

Die Erfindung betrifft die Herstellung einer Anzeige bei einem Kraftfahrzeug, die in einem Außenspiegel positioniert ist.
In der Kraftfahrzeugtechnik gibt es eine Vielzahl von Funktionen, welche Anzeigen bedienen, beispielsweise Warnlampen. Ein Beispiel für eine solche Funktion ist ein Tote-Winkel-Detektionssystem. Mittels Sensoren, beispielsweise optischen Sensoren, Ultraschall- oder Radarsensoren, werden bei diesen Detektionssystemen Verkehrsteilnehmer im Tote-WinkelBereich erkannt und bei erkanntem Verkehrsteilnehmer in diesem Bereich eine Warnleuchte betätigt, die im Innenraum im Bereich des Außenspiegels an der A-Säule des Fahrzeugs montiert ist, oder sich hinter dem Spiegelglass eines Außenspiegels befindet.
Andere Funktionen, die Anzeigen bedienen, sind beispielsweise Einparkhilfen oder ähnliches, bei denen der Abstand zu einem rückwärtigen Fahrzeug visualisiert wird und/oder eine Warnlampe betätigt wird, wenn der Abstand ein Minimalwert unterschreitet.

Derartige Anzeigen sind aufgrund ihrer Aufgabe so zu gestalten, dass sie vom Fahrer in der jeweiligen Situation nicht übersehen werden. Dies könnte z. B. bei einem Tote- Winkel-Detektionssystem bei dem Anbringen der Warnleuchte im Bereich der A-Säule oder bei Einparkhilfen bei Anzeigen im Bereich des Kombiinstruments des Fahrzeugs jedoch der Fall sein.

Aus dem Stand der Technik sind eine Vielzahl solcher Anzeigen hinter dem Spiegelglas bekannt. Dabei werden vorzugsweise dichroitische Spiegel oder semitransparente Spiegel eingesetzt.

Aus der EP 2 042 373 A2 ist es bekannt, eine LED hinter einem semitransparenten Spiegel anzuordnen. Das Licht der LED wird durch die transparente Spiegelschicht geleitet und ist für den Fahrer als Warnanzeige zu sehen. Die Form des Warnsymbols wird durch eine Maske erzielt, die in eine Maskenschicht eingebracht ist.

Nachteilig ist der komplexe Aufbau des Spiegels mit der Beleuchtung und die Verwendung eines semitransparenten Spiegels.

Die US 2008/0030835 betrifft einen elektrochromen Spiegel für eine Rückspiegelbaugruppe eines Fahrzeuges mit einer Lichtquelle hinter dem elektrochromen Spiegel zur selektiven Projizierung von Licht durch den Spiegel und/oder einem Lichtsensor hinter dem elektrochromen Spiegel zum selektiven Empfangen von Licht durch den Spiegel.

Eine Baugruppe eines reflektierenden Elements für einen Außenrückspiegel eines Fahrzeuges ist aus der WO 2008/051910 A2 bekannt. Besagte Baugruppe umfasst eine Spiegelrückplatte mit einer integrierten Lichtsperre im Bereich eines Anzeigeaufnahmeabschnitts, ein Anzeigeelement an dem Anzeigeaufnahmeabschnitt und eine Lichtquelle, von der Licht durch den Anzeigeaufnahmeabschnitt und die Lichtsperre ausgestrahlt wird, wobei die Lichtsperre dafür sorgt, dass durch einen Lichteinstrahlwinkel unterschieden werden kann, ob ein Fahrer des Fahrzeuges oder Fahrer anderer Fahrzeuge das Licht sehen kann bzw. können.

Rückspiegelanordnung mit Lichtern sind des Weiteren aus der US 7,717,596 B1, WO 00/30893 A1, EP 1 022 190 A2, US 6,005,724 und DE 299 21 059 U1 bekannt.

### Vorteile der Erfindung

Aufgabe der vorliegenden Erfindung ist es, ein Verfahren zur Herstellung einer Anzeige in einem Fahrzeugaußenspiegel zu liefern, dessen Anzeige den wesentlichen Vorteil hat, dass zur Anzeige keine sichtbaren Bauteile erforderlich sind, ebensowenig Sonderbauteile, wie beispielsweise halbdurchlässige Spiegelgläser. Damit können undurchlässige Spiegelgläser weiterhin eingesetzt werden.

Diese Aufgabe wird erfindungsgemäß gelöst durch ein Verfahren nach Anspruch 1. Ein vorteilhaftes Verfahren nach der Erfindung ist in Anspruch 2 beschrieben.

Weiter vorteilhaft ist, dass Heizfolien zur Enteisung der Spiegel im Winter, weiterhin mit einer erfindungsgemäß hergestellten Anzeige verwendbar sind. Ebenso vorteilhaft ist, dass keine umfangreichen Modifikationen am Spiegelgehäuse notwendig sind, speziell falls die Anzeigeelemente von hinten an das Spiegelglas eines Spiegels angebracht werden. Außerdem kann somit eine Anzeige mit hoher Leuchtstärke bei geringem Energieverbrauch realisiert werden, ohne den Fahrer zu blenden.

Besonders vorteilhaft ist die Art der Anzeige in Verbindung mit einem Tote-Winkel-Warnsystem, da bei einem Spurwechsel auch bei vorhandenem Warnsystem weiterhin der Blick des Fahrers in den Außenspiegel erforderlich ist, um weiter zurückliegende Fahrzeuge zu erkennen und gegebenenfalls einen Spurwechsel zu unterlassen. Die Anzeige erfolgt bei einem beabsichtigten Spurwechsel in dieser Anwendung daher im direkten Sichtfeld des Fahrers.

Besonders einfach werden die Leuchtelemente an das Spiegelglas mittels Kleben angebracht. In vorteilhafter Weise werden dabei helle Leuchtdioden verwendet, die eine besonders kostengünstige Realisierung bei hoher Leuchtstärke darstellen. Besonders vorteilhaft ist die Verwendung mehrerer Leuchtelemente, welche im Außenbereich des Spiegels, bei einem Außenspiegel vorzugsweise an einem vom Fahrzeug abgewandten Teil des Außenspiegels angebracht sind. Dadurch wird eine besonders effektive Anzeige mit einer besonders hohen Warnwirkung für den Fahrer erreicht, die zugleich nicht im ständigen Sichtfeld des Fahrers liegt.

In anderen Anwendungen, beispielsweise bei Einparkhilfen, bei denen die Leuchtdioden im Innenrückspiegel und/oder im Außenspiegel angebracht werden können, zeigen sich die entsprechenden Vorteile. Weitere Vorteile ergeben sich aus der nachfolgenden Beschreibung von Ausführungsbeispielen bzw. aus den abhängigen Ansprüchen.

Die Erfindung wird nachfolgend anhand der in der Zeichnung dargestellten Ausführungsformen näher erläutert.
Die Figuren 1 und 2 zeigen dabei eine Draufsicht und eine Explosionszeichnung eines Außenspiegels eines Kraftfahrzeugs, bei welchem Leuchtelemente am Spiegelglas angebracht sind.

Figur 3 zeigt einen Schnitt durch einen Spiegel und ein Lichtmodul.

### Beschreibung von Ausführungsbeispielen

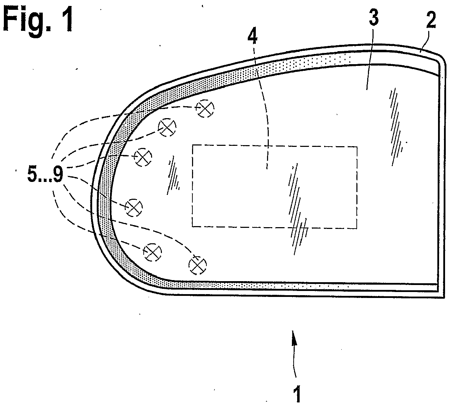

Figur 1 zeigt einen Außenspiegel 1, welcher ein Spiegelgehäuse 2, ein Spiegelglas 3, einen Stellmotor 4 zur Verstellung des Spiegels sowie Leuchtelemente 5 bis 9 umfasst. Die Leuchtelemente sind dabei im gezeigten Ausführungsbeispiel von hinten am Spiegelglas, d. h. auf der von Fahrer nicht sichtbaren Seite des Glases, angebracht, vorzugsweise geklebt. Diese Leuchtelemente werden zur Warnung des Fahrers in bestimmten Situationen angesteuert, im bevorzugten Ausführungsbeispiel von einem Tote-Winkel- Detektionssystem, wenn dieses einen Verkehrsteilnehmer im toten Winkel des Fahrzeugs erkennt. In diesem Fall werden die Leuchtelemente zum Leuchten gebracht, wodurch der Fahrer durch die Beleuchtung des Spiegels auf die Gefahr aufmerksam gemacht wird.

Im bevorzugten Ausführungsbeispiel sind die Leuchtelemente im Außenbereich des Außenspiegels auf der vom Kraftfahrzeug wegweisenden Seite angebracht.

In anderen Ausführungen hat es sich als geeignet erwiesen, ergänzend oder alternativ andere Bereiche des Außenspiegels mit Leuchtelementen, eventuell auch in verschiedenen Farben, zu versehen. Dadurch wird eine andere, bei gleichmäßiger Verteilung der Leuchtelemente über die Spiegelglasfläche verschiedene Anzeigenmuster dargestellt. Bei der gleichmäßigen Verteilung z. B. wird eine Beleuchtung entlang des gesamten Randes des Spiegelgehäuses erreicht. Bei der Verwendung unterschiedlicher Farben können somit unterschiedliche Informationen vermittelt werden.

Die Leuchtelemente 5 bis 9 stellen im bevorzugten Ausführungsbeispiel helle Leuchtdioden dar, die von hinten samt ihrer Zuleitungen in einem Gehäuse untergebracht und an das Spiegelglas geklebt sind.

Solche Lichtmodule, die von hinten auf das semitransparente Spiegelglas geklebt werden, sind auch aus der US 7327321 bekannt.

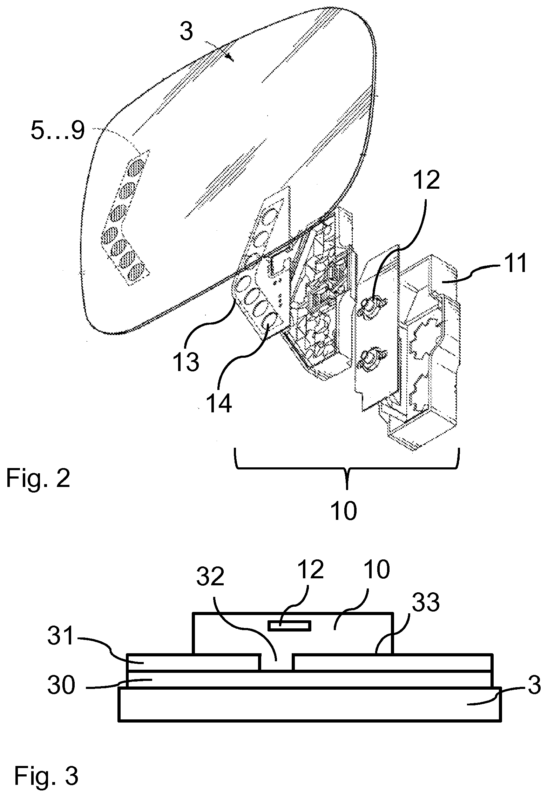

Figur 2 zeigt eine Explosionszeichnung des in Figur 1 dargestellten Außenspiegels mit einem Lichtmodul nach dem Stand der Technik. Die darzustellende Anzeigensymbole 5 bis 9 sind links auf dem Spiegelglas 3 als Aussparung aus der reflektierenden Schicht zu sehen.

Das eigentliche Lichtmodul 10 weist ein Gehäuse mit Leuchtelementen 12 auf, das von einer Maskenebene 13 abgedeckt wird. Die Maskenebene 13 weist Aussparungen 14 auf, die den darzustellenden Symbolen entsprechen. Solche Lichtmodule werden mit einer Klebeschicht auf der Maskenebene 13 versehen und auf die Rückseite des Spiegelglases 3 geklebt.

Demgegenüber verwendet die Erfindung einen anderen Ansatz. Das Lichtmodul weist keine Maskenfunktion auf.

Die darzustellenden Symbole werden erfindungsgemäß direkt auf dem Spiegel eingebracht. Dazu wird das Spiegelglas 3 konventionell mit einer Metallschicht wie einer Chrom- oder Titan-oder Aluminiumschicht 30 verspiegelt, spezielle Spiegelschichten oder dielektrische Schichten sind nicht notwendig.

Das Spiegelglas wird nach der Beschichtung erfindungsgemäß mit einem farbigen Lack oder einer farbigen Kunststoffschicht 31 überzogen. Die Beschichtung 31 dient zum einen in der Herstellung zur Vermeidung von Spiegelbruch, wenn die Spiegelgläser konfektioniert werden. Zum anderen dient diese farbige, vorzugsweise schwarze Lackschicht 31 dazu, eventuelle Reflexionen von der Rückseite des Spiegelglases zu verhindern und eine Restdurchsichtigkeit zu unterbinden.

Für Fahrzeuge in der EU sind asphärische Gläser zugelassen. Es handelt sich dabei um konvex gewölbte Gläser mit einem asphärischen Zusatzbereich, der variable Radien aufweist. Dieser Zusatzbereich muss für die Zulassung der Gläser nach den Europäischen Richtlinien mit einem Begrenzungsstrich markiert werden.

Dazu wird schon heute die Spiegelglasrückseite mit einem Laser strukturiert. Da dieser Herstellungsschritt in der Herstellung des Außenspiegels bereits vorgesehen ist, ist es von Vorteil, das anzuzeigende Symbol in demselben Schritt herzustellen.

In die Lackschicht 31 wird mit einem Laser das Symbol eingeschrieben, das dargestellt werden soll. Die Lackschicht wird dazu selektiv entfernt. Dabei ist auch ein Teilabtrag der Spiegelschicht 30 denkbar. Die reflektierende Schicht bleibt zum Teil erhalten, um eine diffuse Lichterscheinung zu erzielen. Einige Nanometer der Metallschicht reichen dazu aus.

In einer weiteren Ausführungsform werden die Lackschicht und das reflektierende Material zur Gänze von der Rückseite des Spiegelglases abgetragen.

In der in Figur 3 gezeigten Ausführungsform wird das Lichtmodul 10 nicht von einer Abdeckplatte 13 abgedichtet, sondern wird erfindungsgemäß direkt auf die Rückseite des Spiegels geklebt. Dazu werden die Stirnflächen des Gehäuses verwendet. Gegebenenfalls müssen diese Stirnflächen verbreitert werde, um mehr Klebefläche zu erhalten. Das Lichtmodul enthält dabei nur die elektrischen Anschlüsse der LED 12 und eine Gehäuse 11, das bündig mit der Lichtscheibe abschließt. Das Lichtmodul 10 deckt dabei eine Fläche 33 der Spiegelglasrückseite ab. Im Bereich der Fläche 33 ist die farbige Schicht 31 strukturiert. Die Struktur 32 wird mit einem Laserstrahl erzeugt, der Symbole aus der Schicht abdampft. Symbole sind dabei Warnzeichen, oder ISO genormte Darstellungen für Gefahrhinweise, sowie individuelle kundenspezifische Anzeigen. Der Vorteil der Erfindung besteht darin, dass das Lichtmodul nicht präzise über dem Symbol befestigt werden muss. Die Montage des Lichtmoduls ist dadurch vereinfacht. Ist genügend Licht vorhanden, wird das Symbol hinreichend durchstrahlt.

Die ausreichende Beleuchtung kann weitere Maßnahmen im Lichtmodul notwendig machen, wie Reflektoren, oder Optiken. Die Anzahl der verwendeten Leuchtelemente und ihre Art ist von der Anwendung abhängig. Im einfachsten Fall reicht ein Leuchtelement aus.

Anstelle der Anwendung in Verbindung mit einem Toten-Winkel-Detektionssystem werden entsprechende Anzeigenkonzepte in Verbindung mit anderen Funktionen, beispielsweise Einparkhilfen, etc. eingesetzt. Dies gilt für alle die Funktionen, bei denen davon auszugehen ist, dass der Fahrer in einen der Spiegel des Fahrzeugs zur Überwachung des rückwärtigen Bereichs des Fahrzeugs blickt. Die Anzeige ist dabei je nach Ausführung in einer geeigneten Auswahl der vorhandenen Spiegel oder in allen vorhandenen Spiegel eingesetzt.

## Patentansprüche

1. Verfahren zur Herstellung einer Anzeige in einem Fahrzeugaußenspiegel mit einem Spiegelglas (3), das von seiner Rückseite mit leuchtenden Anzeigeelementen (5-9) durchstrahlt wird, wobei das Spiegelglas, das eine metallische Spiegelschicht (30) aufweist, mit einer farbigen Schicht (31) flächig abgedeckt wird, mindestens die farbige Schicht (31) im Bereich (33) eines Lichtmoduls (10) in Form mindestens eines Symbols mit einem Laserstrahl abgetragen wird, **dadurch gekennzeichnet, dass** das Lichtmodul (10), das aus einem Gehäuse (11) und mindestens einem Lichtelement (12) besteht, auf der Rückseite des Spiegelglases (3) befestigt wird, wobei das Lichtmodul (10) nicht von einer Abdeckplatte abgedichtet wird, sondern direkt auf die Rückseite des Spiegelglases (3) mit den Stirnflächen des Gehäuses (11) geklebt wird.

2. Verfahren nach Anspruch 1, **dadurch gekennzeichnet, dass** die metallische Spiegelschicht (30) teilweise oder vollständig abgetragen wird.

## Claims

1. A method for producing a display in a vehicle outer mirror having a mirror glass (3), which is illuminated from its rear side with luminous display elements (5-9), wherein the mirror glass, which comprises a metallic mirror layer (30), is covered over its surface with a colored layer (31), at least the colored layer (31) is removed in a region (33) of a light module (10) in the form of at least one symbol by means of a laser beam, **characterized in that**
the light module (10), which consists of a housing (11) and at least one light element (12), is affixed to the rear side of the mirror glass (3), wherein the light module (10) is not sealed by a cover plate, but is directly adhered onto the rear side of the mirror glass (3) with the front surfaces of the housing (11).

2. The method according to Claim 1, **characterized in that** the metallic mirror layer (30) is partially or fully removed.

## Revendications

1. Procédé de fabrication d'un affichage dans un rétroviseur extérieur de véhicule automobile ayant un verre de miroir (3), lequel va rayonner depuis son côté arrière à l'aide d'éléments d'affichage lumineux (5 à 9), dans lequel le verre de miroir, qui comprend une couche de miroir métallique (30), est recouvert en surface d'une couche colorée (31), au moins la couche colorée (31) est enlevée à l'aide d'un rayon laser dans une zone (33) d'un module d'éclairage (10) sous la forme d'au moins un symbole, **caractérisé en ce que**
le module d'éclairage (10), qui consiste en un boîtier (11) et en au moins un élément d'éclairage (12), est fixé sur le côté arrière du verre de miroir (3), dans lequel le module d'éclairage (10) ne va pas être scellé par une plaque de recouvrement, mais va être collé directement sur le côté arrière du verre de miroir (3) avec les surfaces frontales du boîtier (11).

2. Procédé selon la revendication 1, **caractérisé en ce que** la couche de miroir métallique (30) va être enlevée partiellement ou complètement.
